# EUROPÄISCHE PATENTSCHRIFT

(11) **EP 1 798 085 B1**
(45) Veröffentlichungstag und Bekanntmachung des Hinweises auf die Patenterteilung: **03.12.2008**
(21) Anmeldenummer: 06020063.1
(22) Anmeldetag: 26.09.2006
(51) Int. Cl.: B60J 7/04, B60J 7/053, B60J 7/19, B60J 7/185

(54) **Fahrzeugdachsystem für ein Cabriolet**
Vehicle roof system for a cabriolet
Système de toit de véhicule pour un cabriolet

(30) Priorität: 16.12.2005 DE 102005060148
(43) Veröffentlichungstag der Anmeldung: 20.06.2007
(73) Patentinhaber: Wilhelm Karmann GmbH, 49084 Osnabrück (DE)
(72) Erfinder: Feussahrens, Heino, 49419 Wagenfeld (DE)

(56) Entgegenhaltungen:
- EP-A1- 0 560 027
- EP-A2- 0 554 694
- DE-A1- 10 023 864
- DE-A1- 10 316 943
- DE-U1- 20 023 676
- DE-U1- 20 313 456

## Beschreibung

Die Erfindung betrifft ein Fahrzeugdachsystem für ein Cabriolet gemäß der im Oberbegriff des Patentanspruchs 1 näher definierten Art.

Aus der DE 203 13 456 U1 ist ein Cabriolet-Fahrzeug mit einem zwei starre Dachteile umfassenden beweglichen Dach bekannt. Ein hinteres Dachteil erstreckt sich zumindest zwischen einer Fensterbrüstungslinie und einem in Fahrzeugrichtung vorgeordneten und oberhalb eines Insassenraums liegenden Dachteils. Zusätzlich weist das hintere Dachteil einen im geschlossen Dachzustand zwischen seitlichen Hauptsäulen liegenden und eine Heckscheibe umfassenden Mittelbereich auf.

Die Hauptsäulen und der Mittelbereich sind jeweils für sich sowohl mit der Fahrzeugkarosserie als auch mit dem oberen Dachteil schwenkbeweglich über Gelenke verbunden, die in Seitenansicht eine Mehrgelenkanordnung bilden und deren Drehachsen in zumindest einer Bewegungsstellung des Daches in einer gemeinsamen Ebene liegen. Weiterhin ist zumindest eine zusätzliche Abstützung des oder eines vor dem hinteren Dachteil liegenden Dachteils gegenüber der Karosserie vorgesehen, die in zumindest dieser Bewegungsstellung wirksam ist.

Zusätzlich umfasst das vordere Dachteil einen verschiebbaren Plattenkörper, der nach Art eines Schiebedachs zu öffnen und hierbei über das rückwärtige Dachteil verlagerbar ist. Der Plattenkörper ist aus einem transparentem Kunststoff oder Glas gebildet, so dass er auch bei Verlagerung über die Heckscheibe die Sicht nach hinten nicht gefährdet. Zudem weist der Plattenkörper seitliche Ausleger auf, die in seitliche Führungsbahnen des oberen Dachteils eingreifen.

Des Weiteren sind am Mittelteil des hinteren Dachteils Führungsschienen vorgesehen, die den Plattenkörper in eine Parallellage zur Heckscheibe führen und dort halten. In geschlossener Stellung greift der Plattenkörper sowohl über die im vorderen Bereich angeordneten Ausleger in die Führungsbahnen als auch über weitere Ausleger in die hinteren Führungsschienen ein.

Zur Festlegung des vorderen Dachteils am Windschutzscheibenrahmen sind dem vorderen Dachteil in etwa in dessen Erstreckungsebene gelegene und im geschlossenen Zustand in Fahrtrichtung weisende Zapfen zugeordnet, die in komplementäre Ausnehmung des Windschutzscheibenrahmens eingreifen. Die Zapfen können ebenso wie die Ausnehmungen konisch ausgebildet sein, um dadurch eine Zentrierung des schließenden Daches zu erleichtern. Die Sicherung des vorderen Dachteils am Windschutzscheibenrahmen ist aufgrund einer Sicherung eines verschiebbaren Hauptlagers des Fahrzeugdaches nicht zwingend erforderlich.

Es wird vorgeschlagen, das bekannte Fahrzeugdach als manuelle, teilautomatische oder vollautomatische Variante auszuführen, wobei die vollautomatische Ausführung aufgrund der verschiedenen Antriebe für die Verlagerung des Plattenkörpers gegenüber dem vorderen Dachteil und die Schwenkbewegung des vorderen Dachteils und des hinteren Dachteils eine konstruktiv aufwändige Ausführung mit hohem Steuer- und Regelaufwand darstellt.

Ein Klappverdeck eines Fahrzeuges bzw. ein Fahrzeugdachsystem für ein Cabriolet mit wenigstens zwei beweglich ausgeführten, festen Dachmodulen ist aus der DE 100 23 864 A1 bekannt. Die Dachmodule sind zwischen einer zu einem geschlossenen Zustand des Fahrzeugdaches äquivalenten Position und einer zu einem geöffneten Zustand des Fahrzeugdaches äquivalenten Position verfahrbar ausgeführt. Ein erstes Dachmodul ist bei geschlossenem Fahrzeugdach zwischen einem Windschutzscheibenrahmen und dem zweiten Dachmodul oberhalb eines Fahrzeuginnenraumes angeordnet. Darüber hinaus weist das Klappverdeck zwei in Fahrzeuglängsrichtung verlaufend angeordnete Dachseitenholme und wenigstens ein zwischen den Dachseitenholmen angeordnetes sowie in Fahrzeuglängsrichtung gegenüber den Dachseitenholmen verschiebbar ausgeführtes Dachmittelteil auf. Das Dachmittelteil ist zum Öffnen des Fahrzeugdaches aus seiner Position zwischen den Dachseitenholmen in eine zum zweiten Dachmodul parallele Schichtlage verfahrbar.

Die Dachseitenholme des ersten Dachmoduls sind bei geschlossenem Fahrzeugdach über Hakenelemente mit dem Windschutzscheibenrahmen verbunden und zum Ablegen des Klappverdecks von dem Windschutzscheibenrahmen lösbar und gegenüber einem Dachrahmenhauptteil verschwenkbar.

Zum Ver- und Entriegeln der Dachseitenholme ist eine Riegeleinrichtung vorgesehen, die über eine Antriebseinrichtung entsprechend betätigbar ist. Die Antriebseinrichtung ist mit einem zumindest zweiteiligen Antriebsstrang ausgebildet, der sich von einem Dachrahmenhauptteil zu einem am Windlauf festlegbaren Riegelteil entlang einem Dachseitenholm erstreckt.

Der vorliegenden Erfindung liegt daher die Aufgabe zugrunde, ein Fahrzeugdachsystem für ein Cabriolet zur Verfügung zu stellen, welches durch einen konstruktiv einfachen Aufbau gekennzeichnet ist und eine einfache Handhabung aufweist.

Erfindungsgemäß wird diese Aufgabe mit einem Fahrzeugdachsystem für ein Cabriolet gemäß den Merkmalen des Patentanspruches 1 gelöst.

Bei dem erfindungsgemäßen Fahrzeugdachsystem für ein Cabriolet mit wenigstens zwei beweglich ausgeführten, festen Dachmodulen, sind die Dachmodule zwischen einer zu einem geschlossenen Zustand des Fahrzeugdaches äquivalenten Position und einer zu einem geöffneten Zustand des Fahrzeugdaches äquivalenten Position verfahrbar ausgeführt. Ein erstes Dachmodul ist bei geschlossenem Fahrzeugdach zwischen einem Windschutzscheibenrahmen und dem zweiten Dachmodul oberhalb eines Fahrzeuginnenraumes angeordnet. Zusätzlich weist das erste Dachmodul zwei in Fahrzeuglängsrichtung verlaufend angeordnete Seitenholme und wenigstens ein zwischen den Seitenholmen angeordnetes sowie in Fahrzeuglängsrichtung gegenüber den Seitenholmen derart verschiebbar ausgeführtes Dachmittelteil auf, welches zum Öffnen des Fahrzeugdaches aus seiner Position zwischen den Seitenholmen in eine zum zweiten Dachmodul parallele Schichtlage verfahrbar ist. Die Seitenholme des ersten Dachmoduls sind bei geschlossenem Fahrzeugdach über Hakenelemente mit den Windschutzscheibenrahmen verbunden.

Erfindungsgemäß ist zusätzlich eine Schwenkhebeleinrichtung vorgesehen, mittels der das Dachmittelteil in Bezug auf einen Fahrzeuginnenraum und eine dem Fahrzeuginnenraum abgewandte Oberseite des Windschutzscheibenrahmens zum Verriegeln der Dachmodule bei geschlossenem Fahrzeugdach manuell nach unten gegen einen Anlagebereich des Windschutzscheibenrahmens, an dem das Dachmittelteil bei geschlossenem Fahrzeugdach anliegt, sowie in Fahrzeuglängsrichtung zwischen den beiden Seitenholmen in Richtung des zweiten Dachteiles oder in Richtung des Windschutzscheibenrahmens manuell führbar ist.

Das Fahrzeugdachsystem nach der Erfindung weist im Vergleich zu aus dem Stand der Technik bekannten vollautomatisch ausgeführten Dachsystemen eine konstruktiv einfache Ausgestaltung auf, da das Dachmittelteil mittels der Schwenkhebeleinrichtung manuell betätigbar ist und das Fahrzeugdachsystem in geschlossenem Zustand auch durch die Schwenkhebeleinrichtung verriegelbar ist.

Dadurch, dass die Hakenelemente bei geschlossenem Fahrzeugdach durch eine mit dem Dachmittelteil zusammenwirkende Federeinrichtung in ihrer die Dachseitenholme mit dem Windschutzscheibenrahmen verriegelnden Wirkposition gehalten werden, liegt zwischen den Hakenelementen und den verriegelungsbolzen eine spielfreie Verbindung vor. Somit werden durch im Betrieb des Fahrzeuges auftretende Vibrationen verursachte Betriebsgeräusche auf einfache Art und Weise vermieden.

Weitere Vorteile und vorteilhafte Ausgestaltungen des Gegenstandes nach der Erfindung sind der Beschreibung, der Zeichnung und den Patentansprüchen entnehmbar.

Ein Ausführungsbeispiel eines erfindungsgemäß ausgestalteten Fahrzeugdachsystems ist in der Zeichnung schematisch vereinfacht dargestellt und wird in der nachfolgenden Beschreibung näher erläutert:

Es zeigt:
- Fig. 1: eine vereinfachte perspektivische Teilansicht eines Cabriolets mit einem Fahrzeugdachsystem nach der Erfindung bei geschlossenem Fahrzeugdach;
- Fig. 2: eine Fig. 1 entsprechende Darstellung des Cabriolets bei entriegeltem Dachmittelteil des Fahrzeugdachsystems;
- Fig. 3: eine Fig. 1 entsprechende Darstellung des Cabriolets, wobei das Dachmittelteil des Fahrzeugdachsystems von einem Windschutzscheibenrahmen weg in Richtung eines Fahrzeughecks verschoben ist;
- Fig. 4: eine Fig. 1 entsprechende Darstellung des Cabriolets, wobei das Dachmittelteil vollständig in seine zu dem zweiten Dachmodul des Fahrzeugdachsystems parallele Schichtlage verfahren ist;
- Fig. 5: einen in Fig. 4 näher gekennzeichneten Bereich V in einer vergrößerten Darstellung aus einer durch den Pfeil A näher gekennzeichneten Ansicht;
- Fig. 6: eine Fig. 5 entsprechende Darstellung, wobei eine Verriegelung eines Seitenholmes des Fahrzeugdachsystems mit dem Windschutzscheibenrahmen des Cabriolets gelöst ist;
- Fig. 7: einen in Fig. 1 näher gekennzeichneten Bereich VII in einer vergrößerten Einzeldarstellung aus einer durch den Pfeil B näher gekennzeichneten Ansicht;
- Fig. 8: eine Schwenkhebeleinrichtung des Fahrzeugdachsystems nach der Erfindung in einer vereinfachten dreidimensionalen Darstellung aus einer ersten Ansicht bei entriegeltem Dachmittelteil;
- Fig. 9: die Schwenkhebeleinrichtung in einer Fig. 8 entsprechenden Darstellung aus einer zweiten Ansicht;
- Fig. 10: eine Fig. 8 entsprechende Darstellung der Schwenkhebeleinrichtung bei verriegeltem Dachmittelteil; und
- Fig. 11: die Schwenkhebeleinrichtung in einer gegenüber dem Dachmittelteil verschwenkten Position.

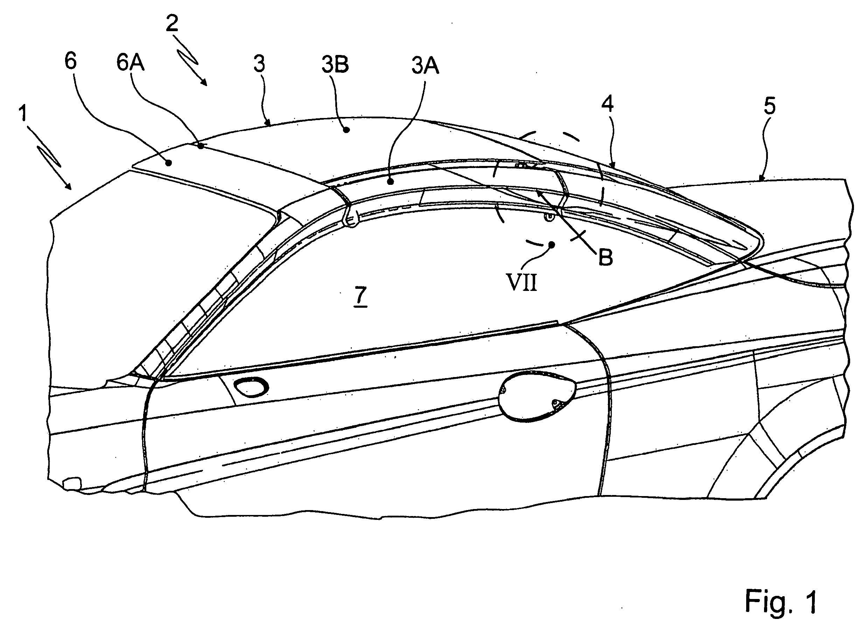

Fig. 1 zeigt eine dreidimensionale Teilansicht eines Cabriolets 1, welches mit einem Fahrzeugdachsystem 2 ausgebildet ist, das zwei beweglich ausgeführte, feste Dachmodule 3, 4 umfasst. Die Dachmodule 3 und 4 sind zwischen einer zu einem geschlossenen Zustand des Fahrzeugdaches äquivalenten Position, die in Fig. 1 dargestellt ist, und einer zu einem vollständig geöffneten Zustand des Fahrzeugdaches äquivalenten Position, welche explizit in der Zeichnung nicht dargestellt ist, auf eine aus der DE 203 13 456 U1 bekannte Art und Weise um ein in einem Fahrzeugheck 5 angeordnetes und ebenfalls nicht näher dargestelltes Hauptlager verschwenkbar bzw. verfahrbar ausgeführt und in einem im Fahrzeugheck 5 innerhalb der Fahrzeugkarosserie des Cabriolets 1 angeordneten Ablagebereich ablegbar.

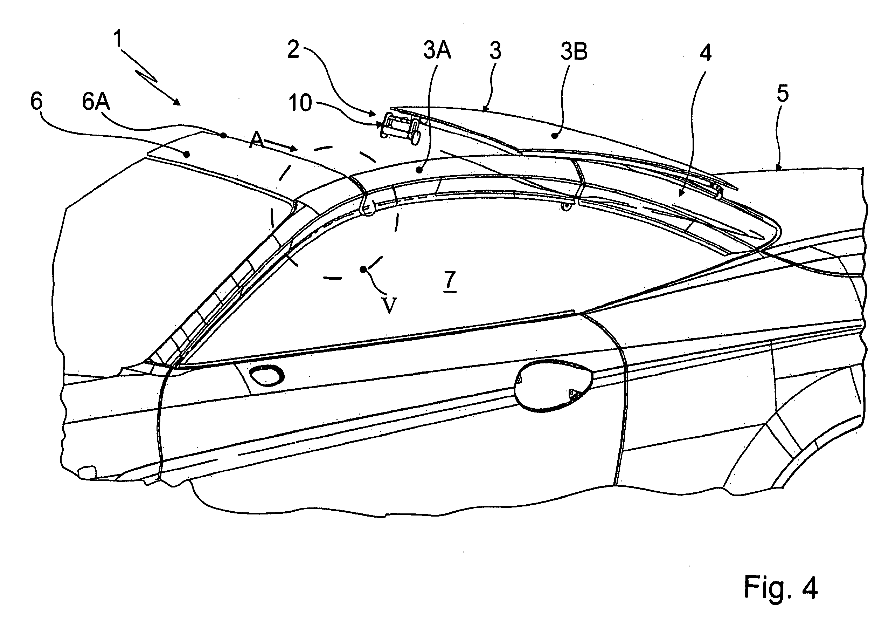

Das erste Dachmodul 3 ist bei geschlossenem Fahrzeugdach in der in Fig.1 dargestellten Art und Weise zwischen einem Windschutzscheibenrahmen 6 und dem zweiten Dachmodul 4 oberhalb eines Fahrzeuginnenraumes 7 angeordnet, mit zwei in Fahrzeuglängsrichtung verlaufenden und auf jeder Fahrzeugseite angeordneten Seitenholmen 3A und wenigstens einem zwischen den Seitenholmen 3A angeordneten sowie in der in Fig. 1 bis Fig. 4 näher dargestellten Art und Weise in Fahrzeuglängsrichtung gegenüber den Seitenholmen 3A verschiebbar ausgeführten Dachmittelteil 3B ausgeführt. Das Dachmittelteil 3B ist zum Öffnen des Fahrzeugdaches aus seiner Position zwischen den Seitenholmen 3A in eine zum zweiten Dachmodul 4 parallele Schichtlage, die in Fig. 4 näher dargestellt ist, verfahrbar ausgeführt. Das Dachmittelteil 3B ist vorliegend transparent ausgebildet, so dass eine Sicht nach hinten durch das vollständig verschobene Dachmittelteil nicht behindert wird.

Zusätzlich sind die Seitenholme 3A in ihren dem zweiten Dachmodul 4 zugewandten Bereichen gelenkig mit diesem verbunden und somit um diesen Bereich gegenüber dem zweiten Dachmodul verschwenkbar ausgeführt.

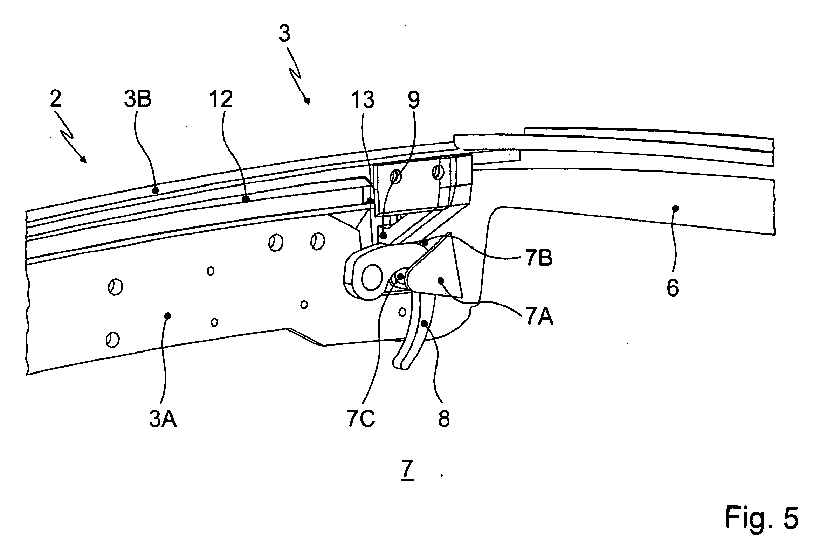

Fig. 5 zeigt einen in Fig. 4 näher gekennzeichneten Bereich V aus einer durch den Pfeil A näher gezeigten Ansicht, aus welcher eine Verriegelung der Seitenholme 3A am Windschutzscheibenrahmen 6 näher ersichtlich ist. Die Seitenholme 3A des ersten Dachmoduls 3 sind bei geschlossenem Fahrzeugdach über Hakenelemente 8 mit dem Windschutzscheibenrahmen 7 verbunden, wobei der Windschutzscheibenrahmen 7 im Bereich der Verriegelung mit dreieckförmigen Schenkeln 7A, 7B ausgebildet ist, zwischen welchen ein Verriegelungsbolzen 7C angeordnet ist, mit welchen jeweils ein drehbar mit einem Seitenholm 3A verbundenes Hakenelement 8 in der in Fig.5 dargestellten Art und Weise in Wirkverbindung bringbar ist.

In der in Fig. 5 gezeigten Stellung des Hakenelementes 8 befindet sich das Dachmittelteil 3B in der in Fig. 1 dargestellten Position, in der das Dachmittelteil 3B derart an den Windschutzscheibenrahmen 6 anliegt, dass eine Oberseite 6A des Windschutzscheibenrahmens 6 und des Dachmittelteils 3B zur Verringerung der Fahrgeräusche einen möglichst ebenen Übergang ausbilden.

Die Hakenelemente 8 werden bei verriegeltem Fahrzeugdachsystem 2 durch mit dem Dachmittelteil 3B fest verbundene Blattfedern 9 in der in Fig. 5 dargestellten Position gehalten und gegen den Verriegelungsbolzen 7C gedrückt, so dass zwischen den Hakenelementen 8 und den Verriegelungsbolzen 7C eine spielfreie Verbindung vorliegt. Damit werden durch im Betrieb des Fahrzeuges auftretende Vibrationen verursachte Betriebsgeräusche auf einfache Art und Weise vermieden. Zusätzlich sind bei der Herstellung der Bauteile geringere Ansprüche an die Herstelltoleranzen gestellt, da diese auf einfache Art und Weise durch verschieden große Federwege der Blattfedern 9 ausgeglichen werden.

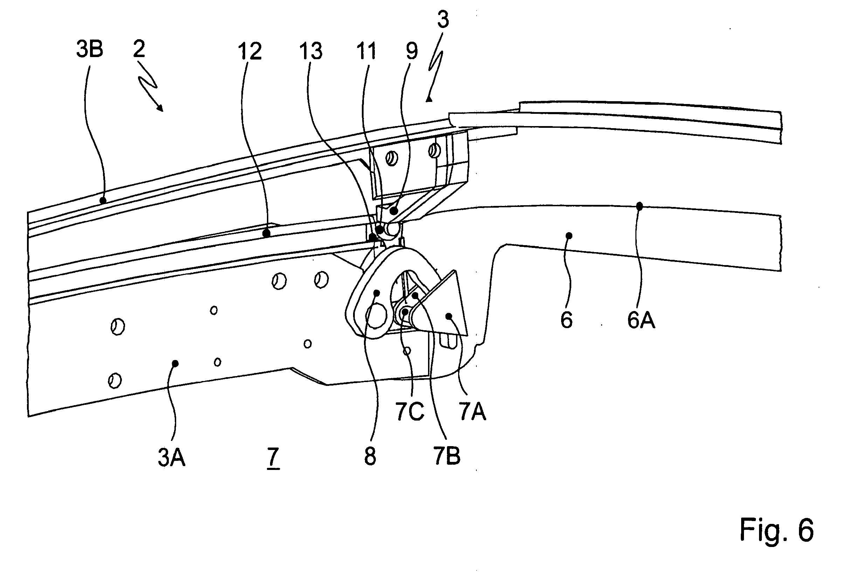

Fig. 6 zeigt eine Fig. 5 entsprechende Darstellung des in Fig. 4 näher gekennzeichneten Bereiches V bei entriegeltem Dachmittelteil 3B. In dieser Stellung des Dachmittelteiles 3B ist die Blattfeder bzw. Federeinrichtung 9 vom Hakenelement 8 abgehoben, so dass das Hakenelement 8 durch eine in Fig. 6 nicht näher dargestellte und als Drehfeder ausgeführte Federeinrichtung in die in Fig. 6 dargestellte und gegenüber der in Fig. 5 gezeigten Stellung des Hakenelementes 8 verschwenkt ist. In der in Fig. 6 dargestellten Position des Hakenelementes 8 ist die Verriegelung zwischen den Seitenholmen 3A und dem Windschutzscheibenrahmen 6 gelöst und das Fahrzeugdachsystem 2 ist im Fahrzeugheck 5 in an sich bekannter Art und Weise in geschichteter Form ablegbar.

Um das Fahrzeug bei geöffnetem Schiebedach bzw. bei entriegeltem Dachmittelteil 3B mit höheren Geschwindigkeiten betreiben zu können, ist es bei einer vorteilhaften Weiterbildung des Gegenstandes nach der Erfindung vorgesehen, dass die Seitenholme 3A durch eine andere und von der Stellung des Dachmittelteils 3B unabhängige Arretierung mit der Fahrzeugkarosserie bzw. dem Windschutzscheibenrahmen verriegelt werden. Die Arretierung ist beispielsweise durch eine mechanische Lösung, wie einen Bowdenzug, der mit der weiteren Dachkinematik wirkverbunden ist, oder durch einen motorischen Antrieb zum Ablegen der beiden Dachmodule im Fahrzeugheck bedarfsgerecht deaktivierbar. Der motorische Antrieb kann beispielsweise als ein dem eigentlichen Verschwenkprozess der beiden Dachmodule vorgeschalteter Leerhub des Hauptantriebszylinders für das Fahrzeugdachsystem, mittels dem die Entriegelung der Seitenholme des ersten Dachmoduls bewirkt wird, ausgeführt sein.

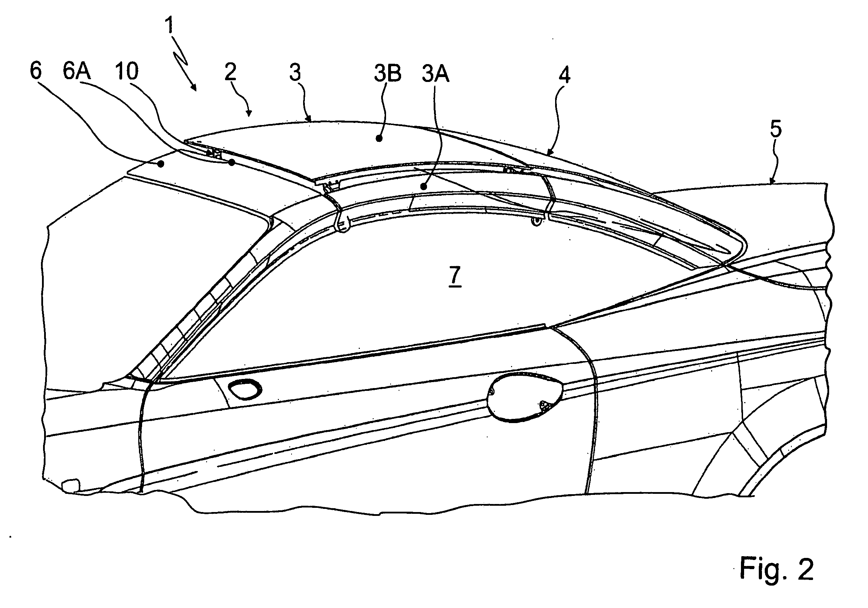

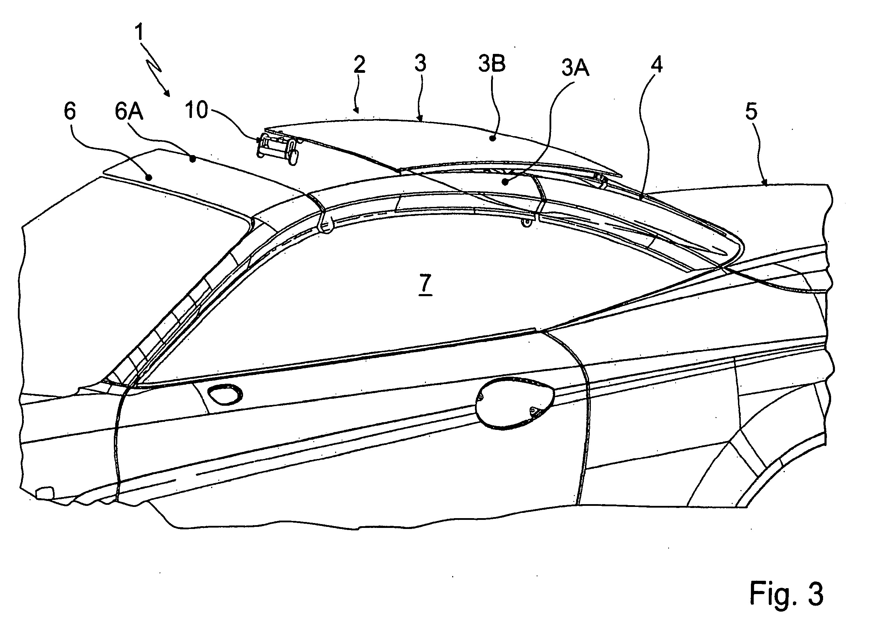

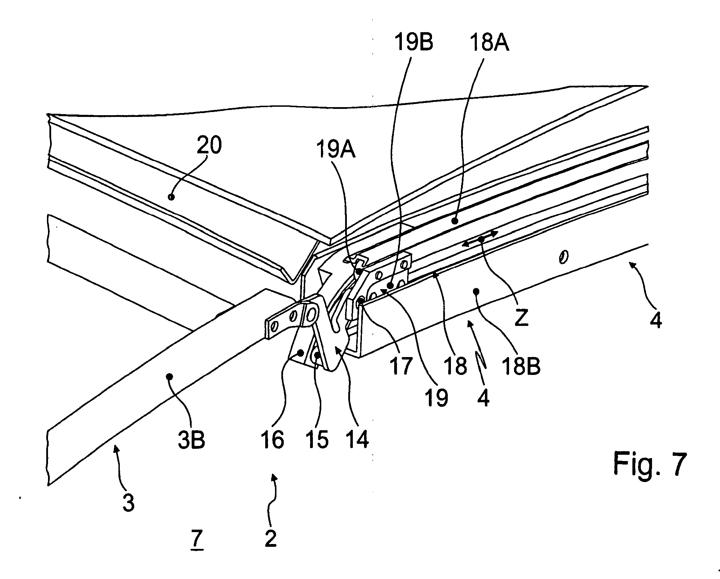

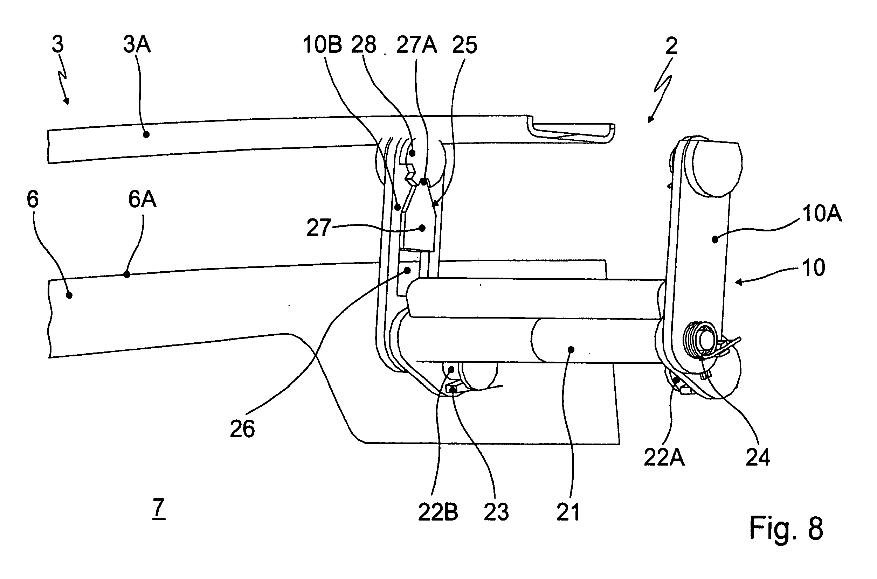

Das erste Dachmodul 3 wird aus der in Fig.5 dargestellten Position, in welcher das erste Dachmodul 3 mit dem Dachmittelteil 3B an einem Anlagebereich 6A des Windschutzscheibenrahmens 6 anliegt, mittels einer in Fig. 3 gezeigten Schwenkhebeleinrichtung 10, welche in Fig.8 bis Fig. 11 näher dargestellt ist, um einen in Fig.7 näher dargestellten Bereich des Fahrzeugsdachsystems 2 gegenüber dem Fahrzeuginnenraum 7 in die in Fig. 6 dargestellte Position nach oben verschwenkt, so dass das erste Dachmodul 3 den Windschutzscheibenrahmen 6 in der in Fig. 2 dargestellten Art und Weise überragt und zwischen dem ersten Dachmodul 3 bzw. dem Dachmittelteil 3B und dem Anlagebereich 6A des Windschutzscheibenrahmens 6 ein Spalt ausgebildet ist. Beim Öffnen des Schiebedachs bzw. des Dachmittelteils 3B dienen die federbelasteten Hakenelemente 8 dazu, das Dachmittelteil 3 gegenüber dem Windschutzscheibenrahmen 6 anzuheben.

Zusätzlich ist das erste Dachmodul 3 in einem dem Windschutzscheibenrahmen 6 zugewandten Bereich mit einem Rollenelement 11 ausgebildet, welches beim Anheben des ersten Dachmoduls 3 ausgehend von der in Fig. 1 und Fig. 5 gezeigten Position in den Fig. 2 und Fig. 6 gezeigte aufgestellte Position in Bezug auf eine Führungsschiene 12 des ersten Dachmoduls 3 derart positioniert wird, dass das Dachmittelteil 3B beim Verschieben in Richtung des zweiten Dachmoduls 4 mit dem Rollenelement 11 in die Führungsschiene 12 eingreift und das Rollenlement 11 in der Führungsschiene 12 unter einer Abrollbewegung das Dachmittelteil 3B reibungsarm führt.

Im Einlaufbereich der Führungsschiene 12 ist eine weitere Blattfeder 13 vorgesehen, an welcher die Führungsrolle 11 in der in Fig. 6 dargestellten Position anliegt und in dieser gehalten wird. Das bedeutet, dass das Dachmittelteil 3B erst durch eine bedienpersonseitige Überwindung der Federkraft der weiteren Blattfeder 13 in Richtung des zweiten Dachmoduls 4 führbar ist.

Aus der in Fig. 7 gezeigten Darstellung geht hervor, dass das Dachmittelteil 3B in einem dem Windschutzscheibenrahmen 6 abgewandten Bereich drehbar mit einem Hebelteil 14 verbunden ist, welches mit einem ersten Bolzen 15 in eine mit dem zweiten Dachmodul 4 fest verbundene Kulisse drehbar und verschieblich eingreift sowie mit einem zweiten Bolzen 17 drehbar mit einem verschieblich in einer Gleitschiene 18 des zweiten Dachmoduls geführten Gleitelement 19 verbunden ist. Das Hebelteil 14 steht mit dem Dachmittelteil 3B, der Kulisse 16 und dem Gleitelement 19 derart in Wirkverbindung, dass das Dachmittelteil 3B beim Öffnen des Fahrzeugdaches auf einer dem Fahrzeuginnenraum 7 abgewandten Oberseite des zweiten Dachmoduls 4 bei einem Verschieben des Dachmittelteils 3B ausgehend vom Windschutzscheibenrahmen 6 in Richtung des zweiten Dachmoduls 4 in der in Fig. 3 und Fig. 4 dargestellten Art und Weise vorbei führbar ist.

Das Gleitelement 19 umfasst vorliegend zwei in Verschieberichtung Z beabstandet zueinander angeordnete Rollkörper 19A sowie einen Gleitgrundkörper 19B, wobei die Rollenkörper 19A in Bezug auf den Fahrzeuginnenraum 7 in einem oberen Bereich 18A der Gleitschiene 18 und der Gleitgrundkörper 19B in einem unteren Bereich 18B der Gleitschiene geführt ist.

Die Kulisse 16 ist vorliegend derart kurvenförmig aufgeführt, dass das Dachteilelement 3B bei einer Bewegung ausgehend von einer zu dem geschlossenen Zustand des Fahrzeugdaches äquivalenten Position in Richtung einer den Fahrzeuginnenraum 7 freigebenden Stellung des Dachmittelteils 3B, d. h. bei einer translatorischen Bewegung des Dachmittelteils 3B in Richtung des zweiten Dachmoduls 4, gleichzeitig senkrecht zur Fahrzeugdachebene angehoben wird und dabei an dem zweiten Dachmodul 4 vorbei geführt wird.

Damit beim Öffnen des Fahrzeugdaches auf den Dachmodulen 3 und 4 befindliches Wasser im Stoßbereich zwischen den beiden Dachmodulen 3 und 4 nicht in den Fahrzeuginnenraum 7 eintritt, ist im Stoßbereich zwischen dem Dachmittelteil 3B und dem zweiten Dachmodul 4 eine mit dem zweiten Dachmodul 4 fest verbundene und vorliegend als Wasserrinne ausgebildete Wasserauffangeinrichtung 20 vorgesehen, welche zum Abführen des von den Dachmodulen 3 und 4 abfließenden Wassers aus dem Bereich oberhalb des Fahrzeuginnenraumes 7 mit einem Wasserabführmanagement des Fahrzeugdachsystems verbunden ist.

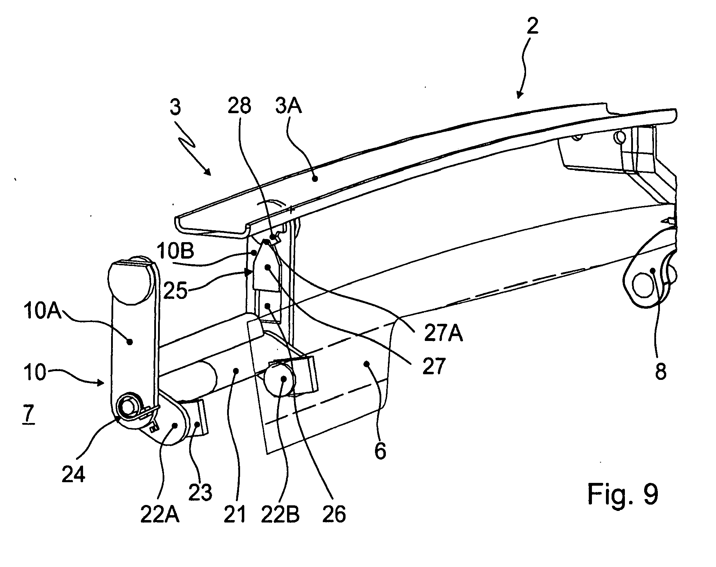

In Fig. 8 und Fig. 9 ist die Schwenkhebeleinrichtung 10 jeweils in vergrößerten Ansichten bei gegenüber dem Windschutzscheibenrahmen 6 angehobenen Dachmittelteil 3B gezeigt, wobei die Schwenkhebeleinrichtung 10 mit einem gegenüber zwei gegenüber dem Dachmittelteil 3B verschwenkbar ausgeführten Schenkelteilen 10A und 10B verdrehbar ausgeführten Griffzylinder 21, der mit zwei Eingriffselementen 22A und 22B ausgeführt ist, in eine Stecklagerung 23 des Windschutzscheibenrahmens 6 eingreift.

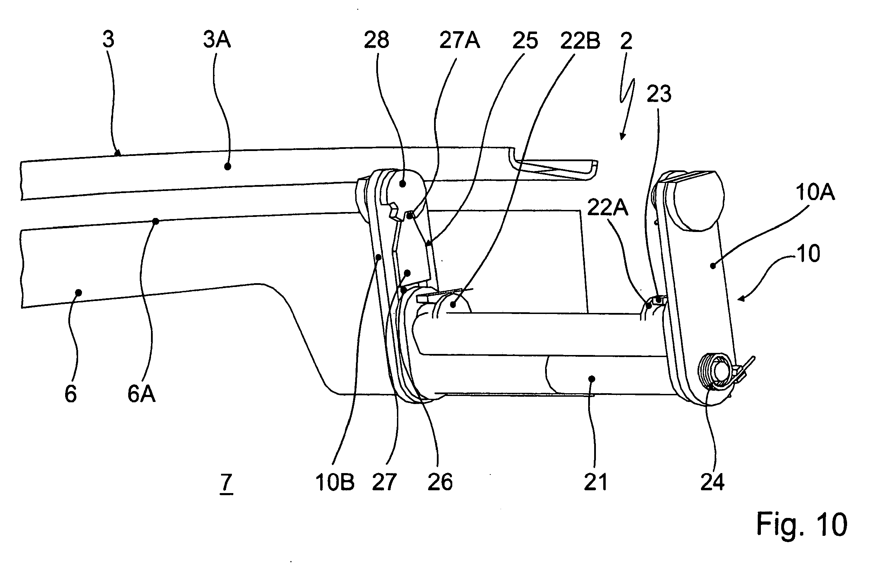

Der Griffzylinder 21 ist über eine als Drehfeder ausgeführte Federeinrichtung 24 in Richtung der in Fig. 10 gezeigten Stellung gegenüber den Schenkelteilen 10A und 10B angefedert, die mit einem vollständig geschlossenen Fahrzeugdach korrespondiert. Das bedeutet, dass das Fahrzeugdach des Cabriolet 1 in dem in Fig. 10 dargestellten Zustand der Schwenkhebeleinrichtung 10 vollständig geschlossen ist.

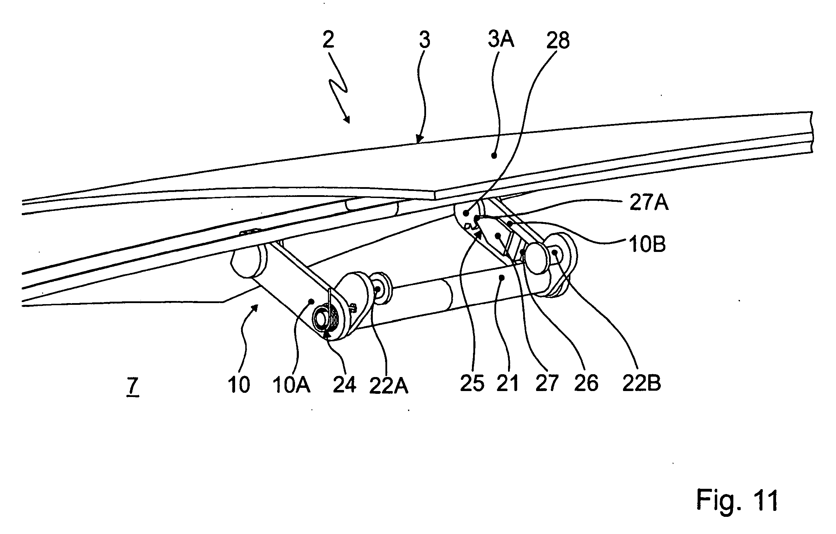

Darüber hinaus ist die Schwenkhebeleinrichtung 10 mit einer Rasteinrichtung 25 ausgeführt, mittels der die Schenkelteile 10A und 10B in wenigstens zwei verschiedenen Schwenkpositionen verriegelbar sind. Dabei ist eine erste Schwenkposition der Schenkelteile 10A und 10B in Fig. 8 bis Fig. 10 dargestellt und zum Schließen des Fahrzeugdaches vorgesehen, während eine zweite in Fig. 11 dargestellte Schwenkposition zum vollständigen Öffnen des Fahrzeugdaches vorgesehen ist. Zudem ragt die Schwenkhebeleinrichtung 10 in ihrer zweiten Schwenkposition, in der die Schwenkhebeleinrichtung 10 entweder in Richtung des zweiten Dachmoduls 4 oder des Windsschutzscheibenrahmens 6 verschwenkt ist, weniger stark in Richtung des Fahrzeuginnenraums 7 vor.

Die Rasteinrichtung 25 der Schwenkhebeleinrichtung 10 weist ein in einer Kulissenführung 26 gegen ein nicht näher dargestelltes Federelement veschiebbar ausgeführtes Rastelement 27 auf, welches in jeder der Schwenkpositionen der Schenkelteile 10A und 10B mit einem zapfenartigen Bereich 27A jeweils in den mit einer Schwenkposition korrespondierenden Aufnahmebereich einer drehfest mit dem Dachmittelteil 3B verbundenen Rastscheibe 28 eingreift.

Das Dachmittelteil 3B wird von der Schwenkhebeleinrichtung 10 in dem in Fig. 10 dargestellten Zustand fest und dichtend an den Windschutzscheibenrahmen 6 gedrückt und bildet mit der Oberseite des Windschutzscheibenrahmens 6 eine plane Dachoberseite aus.

Zum Öffnen des Fahrzeugdaches ist der Griffzylinder 21 von einer Bedienperson entgegen der Federkraft der Federeinrichtung 24 zu verdrehen, wobei die über die Rasteinrichtung 25 drehfest mit dem Dachmittelteil 3B verbundene Schwenkhebeleinrichtung 10 aufgrund der in der Stecklagerung 23 des Windschutzscheibenrahmens 6 befindlichen Eingriffselemente 22A und 22B in Bezug auf den Fahrzeuginnenraum 7 nach oben und von dem Windschutzscheibenrahmen 6 weg verfahren wird.

Anschließend wird das Rastelement 27 in der Kulissenführung 26 derart bewegt, dass das Rastelement 27 mit seinem zapfenartigen Bereich 27A aus dem Eingriff mit der Rastscheibe 28 geführt wird und die Schenkelteile 10A und 10B gegenüber dem Dachmittelteil 3B verschwenkt werden können. Beim Verschwenken der Schenkelteile 10A und 10B gegenüber dem Dachmittelteil 3B werden die Eingriffselemente 22A und 22B aus der Stecklagerung 23 geführt. Anschließend wird das Dachmittelteil 3B bei entsprechender bedienpersonseitiger Betätigung der Schwenkhebeleinrichtung 10 in Richtung des Fahrzeughecks 5 in vorbeschriebener Art und Weise mit seiner dem zweiten Dachmodul 4 zugewandten Seite über das zweite Dachmodul 4 gehoben und in die zum zweiten Dachmodul 4 parallele Schichtlage in den Führungsschienen 12 des ersten Dachmoduls 3 sowie in den Gleitschienen 18 des zweiten Dachmoduls 4 geführt, bis ein nicht näher dargestellter Anschlag erreicht wird.

Dabei ist vorliegend eine vollständige Öffnung des Fahrzeugdaches nur bei vollständig zurück verschobenen Dachmittelteil 3B vorgesehen. Das Dachmittelteil 3B greift mit seinen Rollenelementen 11 auch in seiner vollständig in Richtung des Fahrzeughecks 5 verschobenen Stellung in die Führungsschienen 12 des ersten Dachmoduls 3 bzw. der Seitenholme 3A ein und stellt somit einen Teil der Verschwenkkinematik des Fahrzeugdachsystems 2 dar.

Alternativ zu der Lösung, dass das Dachmittelteil ein Teil der Verschwenkkinematik des Fahrzeugdachsystem ist, ist es bei einer Weiterbildung des erfindungsgemäßen Fahrzeugdachsystems vorgesehen, dass das erste Dachmodul 3 und das zweite Dachmodul 4 das Dachmittelteil 3B derartig gegenüber dem zweiten Dachmodul 4 in Richtung des Fahrzeughecks verschoben wird, dass die Rollenelemente des Dachmittelteils 3B aus dem Eingriff mit den Führungsschienen 2 des ersten Dachmoduls 3 geführt werden. Der Verschwenkmechanismus ist dann mit einem zusätzlichen Lenker in an sich bekannter Art und Weise auszuführen, um die im Stoßbereich der Seitenholme 3A und des zweiten Dachmoduls 4 über ein Gelenk miteinander verbundene Dachmodule 3 und 4 in bekannter Weise zueinander zu verschwenken und in gestapeltem Zustand im Fahrzeugheck 5 abzulegen.

Zur Verbesserung der Fahrzeuginsassensicherheit ist das Dachmittelteil 3B in jeder gegenüber dem Windschutzscheibenrahmen 7 verschobenen Position arretierbar, so dass das Dachmittelteil 3B während eines Fahrbetriebs in der von einer Bedienperson ausgewählten Stellung verbleibt und keine selbsttätigen Bewegungen gegenüber den Seitenholmen bzw. dem zweiten Dachmodul 4 ausführt.

### BEZUGSZEICHENLISTE

- 1: Cabriolet
- 2: Fahrzeugdachsystem
- 3: erstes Dachmodul
- 3A: Seitenholm
- 3B: Dachmittelteil
- 4: zweites Dachmodul
- 5: Fahrzeugheck
- 6: Windschutzscheibenrahmen
- 6A: Oberseite des Windschutzscheibenrahmens
- 7: Fahrzeuginnenraum
- 7A, B: Schenkel
- 7C: Verriegelungsbolzen
- 8: Hakenelement
- 9: Blattfeder
- 10: Schwenkhebeleinrichtung
- 10A, B: Schenkelteil
- 11: Rollenelement
- 12: Führungsschiene
- 13: weitere Blattfeder
- 14: Hebelteil
- 15: erster Bolzen
- 16: Kulisse
- 17: zweiter Bolzen
- 18: Gleitschiene
- 18A: oberer Bereich der Gleitschiene
- 18B: unterer Bereich der Gleitschiene
- 19: Gleitelement
- 19A: Rollenkörper
- 19B: Gleitgrundkörper
- 20: Wasserauffangeinrichtung
- 21: Griffzylinder
- 22: Eingriffselement
- 23: Stecklagerung
- 24: Federeinrichtung
- 25: Rasteinrichtung
- 26: Kulissenführung
- 27: Rastelement
- 27A: zapfenartiger Bereich des Rastelementes
- 28: Rastscheibe

## Patentansprüche

1. Fahrzeugdachsystem (2) für ein Cabriolet (1) mit wenigstens zwei beweglich ausgeführten, festen Dachmodulen (3, 4), die zwischen einer zu einem geschlossenen Zustand des Fahrzeugdaches äquivalenten Position und einer zu einem geöffneten Zustand des Fahrzeugdaches äquivalenten Position verfahrbar ausgeführt sind, wobei ein erstes Dachmodul (3) bei geschlossenem Fahrzeugdach zwischen einem Windschutzscheibenrahmen (6) und dem zweiten Dachmodul (4) oberhalb eines Fahrzeuginnenraumes (7) angeordnet ist und zwei in Fahrzeuglängsrichtung verlaufend angeordnete Seitenholme (3A) und wenigstens ein zwischen den Seitenholmen (3A) angeordnetes sowie in Fahrzeuglängsrichtung gegenüber den Seitenholmen (3A) verschiebbar ausgeführtes Dachmittelteil (3B) aufweist, welches zum Öffnen des Fahrzeugdaches aus seiner Position zwischen den Seitenholmen (3A) in eine zum zweiten Dachmodul (4) parallele Schichtlage verfahrbar ist, und wobei die Seitenholme (3A) des ersten Dachmoduls (3) bei geschlossenem Fahrzeugdach über Hakenelemente (8) mit dem Windschutzscheibenrahmen (6) verbunden sind,
**dadurch gekennzeichnet,**
**dass** eine Schwenkhebeleinrichtung (10) vorgesehen ist, mittels der das Dachmittelteil (3B) in Bezug auf den Fahrzeuginnenraum (7) und eine dem Fahrzeuginnenraum (7) abgewandte Oberseite des Windschutzscheibenrahmens (6) zum Verriegeln der Dachmodule (3, 4) bei geschlossenem Fahrzeugdach manuell nach unten gegen einen Anlagebereich (6A) des windschutzscheibenrahmens (6), an dem das Dachmittelteil (3B) bei geschlossenem Fahrzeugdach anliegt, sowie in Fahrzeuglängsrichtung zwischen den beiden Seitenholmen (3A) in Richtung des zweiten Dachmoduls (4) oder in Richtung des Windschutzscheibenrahmens (6) führbar ist, wobei die Hakenelemente (8) bei geschlossenem Fahrzeugdach durch eine mit dem Dachmittelteil (3B) zusammenwirkende Federeinrichtung (9) in ihrer die Seitenholme (3B) mit dem Windschutzscheibenrahmen (6) verriegelnden Wirkposition gehalten werden,

2. Fahrzeugdachsystem nach Anspruch 1,
**dadurch gekennzeichnet,**
**dass** die Hakenelemente (8) bei von dem Anlagebereich (6A) des Windschutzscheibenrahmens (6) abgehobenem Dachmittelteil (3B) durch eine in Richtung der zu dem entriegelten Zustand der Seitenholme (3A) äquivalenten Position wirkende weitere Federeinrichtung aus dem Eingriff mit dem Windschutzscheibenrahmen (6) geführt sind.

3. Fahrzeugdachsystem nach Anspruch 1,
**dadurch gekennzeichnet,**
**dass** die Hakenelemente bei gegenüber dem Windschutzscheibenrahmen in Richtung des zweiten Dachmoduls verschobenem Dachmittelteil von einer deaktivierbaren Arretierung in ihrer die Seitenholme an dem Windschutzscheibenrahmen verriegelnden Wirkposition gehalten sind.

4. Fahrzeugdachsystem nach Anspruch 3,
**dadurch gekennzeichnet,**
**dass** die Arretierung mittels eines Bowdenzugs deaktivierbar ist.

5. Fahrzeugdachsystem nach einem der Ansprüche 1 bis 4,
**dadurch gekennzeichnet,**
**dass** das Dachmittelteil (3B) in jeder gegenüber dem Windschutzscheibenrahmen (6) verschobenen Position arretierbar ist.

6. Fahrzeugdachsystem nach einem der Ansprüche 1 bis 5,
**dadurch gekennzeichnet,**
**dass** die Schwenkhebeleinrichtung (10) eine Rasteinrichtung (25) aufweist, mittels der Schenkelteile (10A, 10B) der Schwenkhebeleinrichtung (10) in wenigstens zwei verschiedenen Schwenkpositionen verriegelbar sind, wobei eine erste Schwenkposition zum Schließen des Fahrzeugdaches und eine zweite Schwenkposition zum Öffnen des Fahrzeugdaches vorgesehen ist.

7. Fahrzeugdachsystem nach Anspruch 6,
**dadurch gekennzeichnet,**
**dass** die Rasteinrichtung (25) der Schwenkhebeleinrichtung (10) ein in einer Kulisseführung (26) gegen ein Federelement verschiebbar ausgeführtes Rastelement (27) aufweist, welches in jeder der Schwenkpositionen mit einem zapfenartigen Bereich (27A) jeweils in einen mit einer Schwenkposition korrespondierenden Aufnahmebereich einer drehfest mit dem Dachmittelteil (3B) verbundenen Rastscheibe (28) eingreift.

8. Fahrzeugdachsystem nach Anspruch 7,
**dadurch gekennzeichnet,**
**dass** die Schenkelteile (10A, 10B) drehbar am Dachmittelteil (3B) gelagert sind und an ihren dem Dachmittelteil (3B) abgewandten Enden mit gegenüber den Schenkelteilen (10A, 10B) verschwenkbar ausgebildeten Eingriffselementen (22A, 22B) ausgeführt sind, welche bei geschlossenem Fahrzeugdach derart mit einer Stecklagerung (23) des Windschutzscheibenrahmens (6) zusammenwirken, dass das Fahrzeugdach in geschlossenem Zustand gehalten ist.

9. Fahrzeugdachsystem nach einem der Ansprüche 1 bis 8,
**dadurch gekennzeichnet,**
**dass** das Dachmittelteil (3B) beim Öffnen des Fahrzeugdaches in einem dem Windschutzscheibenrahmen (6) zugewandten Bereich mit Rollenelementen (11) in Führungsschienen (12) der Seitenholme (3A) eingreift.

10. Fahrzeugdachsystem nach einem der Ansprüche 1 bis 9,
**dadurch gekennzeichnet,**
**dass** das Dachmittelteil (3B) in einem dem Windschutzscheibenrahmen (6) abgewandten Bereich drehbar mit Hebelteilen (14) verbunden ist, welche jeweils mit einem ersten Bolzen (15) in eine fest mit dem zweiten Dachmodul (4) verbundene Kulisse (16) und mit einem zweiten Bolzen (17) drehbar mit einem verschieblich in einer Gleitschiene (18) des zweiten Dachmoduls (4) geführten Gleitelement (19) verbunden sind, wobei die Hebelteile (14) derart mit dem Dachmittelteil (3B), den Kulissen (16) und den Gleitelementen (19) in Wirkverbindung stehen, dass das Dachmittelteil (3B) bei einem Öffnen des Fahrzeugdaches auf einer dem Fahrzeuginnenraum (7) abgewandten Oberseite des zweiten Dachmoduls (4) an diesem vorbei führbar ist.

11. Fahrzeugdachsystem nach einem der Ansprüche 1 bis 10,
**dadurch gekennzeichnet,**
**dass** das erste Dachmodul (3) und das zweite Dachmodul (4) im Stoßbereich der Seitenholme (3A) und des zweiten Dachmoduls (4) gelenkig miteinander verbunden sind.

12. Fahrzeugdachsystem nach einem der Ansprüche 1 bis 11,
**dadurch gekennzeichnet,**
**dass** im Stoßbereich zwischen dem Dachmittelteil (3B) und dem zweiten Dachmodul (4) eine Wasserauffangeinrichtung (20) angeordnet ist.

## Claims

1. A vehicle roof system (2) for a convertible (1), said system comprising at least two movable, solid roof modules (3, 4), which are movable between a position equivalent to a closed state of the vehicle roof and a position equivalent to an opened state of the vehicle roof, wherein, when the vehicle roof is closed, a first roof module (3) is arranged between a windshield frame (6) and the second roof module (4) above an interior (7) of the vehicle and comprises two lateral rails (3A) arranged to extend in the longitudinal direction of the vehicle and at least one central roof part (3B), which is arranged between the lateral rails (3A) and is displaceable relative to said lateral rails (3A) in the longitudinal direction of the vehicle, said central roof part (3B) being displaceable, in order to open the vehicle roof, from its position between the lateral rails (3A) to a stacked position parallel to the second roof module (4), and wherein the lateral rails (3A) of the first roof module (3) are connected to the windshield frame (6) via hook elements (8) when the vehicle roof is closed,
**characterized in that**
a pivoting lever device (10) is provided by means of which the central roof part (3B), for locking the roof modules (3, 4) when the vehicle roof is closed, can be manually guided downwards relative to the interior (7) of the vehicle and to an upper surface of the windshield frame (6) turned away from the interior (7) of the vehicle towards an abutment region (6A) of the windshield frame (6) against which the central roof part (3B) abuts when the vehicle roof is closed, as well as in the longitudinal direction of the vehicle, between the two lateral rails (3A), in the direction of the second roof module (4) or in the direction of the windshield frame (6), with the hook elements (8) being held, when the vehicle roof is closed, in their operative position locking the lateral rails (3B) to the windshield frame (6) by a spring device (9) cooperating with the central roof part (3B).

2. Vehicle roof system according to claim 1,
**characterized in that**,
when the central roof part (3B) is lifted from the abutment region (6A) of the windshield frame (6), the hook elements (8) are guided out of engagement with the windshield frame (6) by a further spring device acting in the direction of the position which is equivalent to the unlocked state of the lateral rails (3A).

3. Vehicle roof system according to claim 1,
**characterized in that**,
when the central roof part is displaced relative to the windshield frame in the direction of the second roof module, the hook elements are held in their operative position locking the lateral rails to the windshield frame by a locking device which can be deactivated.

4. Vehicle roof system according to claim 3,
**characterized in that**
the locking device can be deactivated by means of a Bowden cable.

5. Vehicle roof system according to any one of claims 1 to 4,
**characterized in that**
the central roof part (3B) can be locked in any position of displacement relative to the windshield frame (6).

6. Vehicle roof system according to any one of claims 1 to 5,
**characterized in that**
the pivoting lever device (10) comprises a snap-fit device (25) by means of which limbs (10A, 10B) of the pivoting lever device (10) can be locked in at least two different pivoting positions, a first pivoting position being provided for closing the vehicle roof and a second pivoting position being provided for opening the vehicle roof.

7. Vehicle roof system according to claim 6,
**characterized in that**
the snap-fit device (25) of the pivoting lever device (10) comprises a snap-fit element (27), which is designed to be displaceable within a sliding block guide (26) against a spring element and which, in each of said pivoting positions, enters into engagement, via a pinion-like region (27A), with a respective receiving region of a snap-fit disk (28) connected to the central roof part (3B) in a manner secured against rotation, said receiving region corresponding to a respective pivoting position.

8. Vehicle roof system according to claim 7,
**characterized in that**
the limbs (10A, 10B) are rotatably mounted to the central roof part (3B) and are provided, at their ends facing away from the central roof part (3B), with engaging elements (22A, 22B), which are pivotable with respect to the limbs (10A, 10B) and which, when the vehicle roof is closed, cooperate with a closed bearing (23) of the windshield frame (6) such that the vehicle roof is held in the closed state.

9. Vehicle roof system according to any one of claims 1 to 8,
**characterized in that**
during opening of the vehicle roof, the central roof part (3B) enters into engagement with guide rails (12) of the lateral rails (3A) via roller elements (11) in a region facing the windshield frame (6).

10. Vehicle roof system according to any one of claims 1 to 9,
**characterized in that**
the central roof part (3B) is rotatably connected with lever parts (14) in a region facing away from the windshield frame (6), each of said lever parts (14) entering into engagement, via a first pinion (15), with a sliding block (16) that is securely connected to the second roof module (4) and being rotatably connected, via a second pinion (17), to a sliding element (19) that is displaceably guided in a sliding rail (18) of the second roof module (4), said lever parts (14) being operatively connected to the central roof part (3B), the sliding blocks (16) and the sliding elements (19) such that, when opening the vehicle roof, the central roof part (3B) can be guided over the second roof module (4) on an upper surface of the second roof module (4) facing away from the interior (7) of the vehicle.

11. Vehicle roof system according to any one of claims 1 to 10,
**characterized in that**
the first roof module (3) and the second roof module (4) are articulated to one another in the joint region of the lateral rails (3A) and of the second roof module (4).

12. Vehicle roof system according to any one of claims 1 to 11,
**characterized in that**
a water-retaining device (20) is arranged in the joint region between the central roof part (3B) and the second roof module (4).

## Revendications

1. Système de toit véhicule (2) pour un cabriolet (1), ledit système comprenant au moins deux modules de toit (3, 4) solides déplaçables, qui peuvent être déplacés entre une position équivalente à un état fermé du toit de véhicule et une position équivalente à un état ouvert du toit de véhicule, dans lequel système, quand le toit de véhicule est fermé, un premier module de toit (3) est disposé entre un cadre de pare-brise (6) et le deuxième module de toit (4), au-dessus d'un habitacle (7) du véhicule, et comprend deux barres latérales (3A) disposées de manière à s'étendre en direction longitudinale du véhicule et au moins une partie de toit centrale (3B), qui est disposée entre lesdites barres latérales (3A) et est déplaçable par rapport aux barres latérales (3A) en direction longitudinale du véhicule, ladite partie de toit centrale (3B) étant déplaçable, pour ouvrir le toit de véhicule, de sa position entre les barres latérales (3A) vers une position superposée, parallèle au deuxième module de toit (4) et les barres latérales (3A) du premier module de toit (3) étant reliées au cadre de pare-brise (6) au moyen d'éléments de crochet (8) lors que le toit de véhicule est fermé,
**caractérisé en ce que**
l'on prévoit un dispositif de levier pivotant (10) au moyen duquel la partie de toit centrale (3B) peut être guidée vers le bas à main, par rapport à l'habitacle (7) du véhicule et à une face supérieure du cadre de pare-brise (6), ladite face étant détournée de l'habitacle (7) du véhicule, afin de verrouiller les modules de toit (3, 4) lorsque le toit de véhicule est fermé, ce guidage étant effectué vers une région de contact (6A) du cadre de pare-brise (6) avec laquelle la partie de toit centrale (3B) vient en contact lorsque le toit de véhicule est fermé, ainsi qu'en direction longitudinale du véhicule, entre les deux barres latérales (3A), en direction du deuxième module de toit (4) ou en direction du cadre de pare-brise (6), lesdits éléments de crochet (8) étant maintenus, lorsque le toit de véhicule est fermé, dans leur position opérative verrouillant les barres latérales (3B) sur le cadre de pare-brise (6), par un dispositif de ressort (9) coopérant avec la partie de toit centrale (3B).

2. Système de toit véhicule selon la revendication 1,
**caractérisé en ce que**,
la partie de toit centrale (3B) ayant été enlevée de la région de contact (6A) du cadre de pare-brise (6), les éléments de crochet (8) sont guidés hors de prise avec le cadre de pare-brise (6) par un dispositif de ressort additionnel agissant en direction de la position qui est équivalente à l'état déverrouillé des barres latérales (3A).

3. Système de toit véhicule selon la revendication 1,
**caractérisé en ce que**,
la partie de toit centrale ayant été déplacée par rapport au cadre de pare-brise en direction du deuxième module de toit, les éléments de crochet sont maintenus dans leur position opérative verrouillant les barres latérales sur le cadre de pare-brise par un dispositif d'arrêt qui peut être désactivé.

4. Système de toit véhicule selon la revendication 3,
**caractérisé en ce que**
le dispositif d'arrêt peut être désactivé au moyen d'un câble Bowden.

5. Système de toit véhicule selon l'une quelconque des revendications 1 à 4,
**caractérisé en ce que**
la partie de toit centrale (3B) peut être arrêtée dans n'importe quelle position de déplacement par rapport au cadre de pare-brise (6).

6. Système de toit véhicule selon l'une quelconque des revendications 1 à 5,
**caractérisé en ce que**
le dispositif de levier pivotant (10) comprend un dispositif d'encliquetage (25) au moyen duquel des bras (10A, 10B) du dispositif de levier pivotant (10) peuvent être verrouillés dans au moins deux positions de pivotement différentes, une première position de pivotement étant destinée à fermer le toit de véhicule et une deuxième position de pivotement étant destinée à ouvrir le toit de véhicule.

7. Système de toit véhicule selon la revendication 6,
**caractérisé en ce que**
le dispositif d'encliquetage (25) du dispositif de levier pivotant (10) comprend un élément d'encliquetage (27), qui est destiné à être déplacé dans un guide de coulisse (26), à l'encontre d'un élément de ressort, et qui, dans chacune desdites positions de pivotement, vient en prise par une région (27A), conformée à la manière d'un boulon, dans une région de logement respective d'un disque d'encliquetage (28), ledit disque étant relié à la partie de toit centrale (3B) d'une manière immobilisé contre une rotation et ladite région de logement correspondant à une position de pivotement respective.

8. Système de toit véhicule selon la revendication 7,
**caractérisé en ce que**
les bras (10A, 10B) sont montés rotatifs sur la partie de toit centrale (3B) et sont pourvus, à leurs extrémités détournées de la partie de toit centrale (3B), d'éléments de prise (22A, 22B) qui peuvent être pivotés par rapport aux bras (10A, 10B) et qui, le toit de véhicule étant fermé, coopèrent avec un palier fermé (23) du cadre de pare-brise (6) de manière à maintenir le toit de véhicule à l'état fermé.

9. Système de toit véhicule selon l'une quelconque des revendications 1 à 8,
**caractérisé en ce que**
lors de l'ouverture du toit de véhicule, la partie de toit centrale (3B) vient en prise avec des rails de guidage (12) des barres latérales (3A) au moyen d'éléments à rouleaux (11) dans une région tournée vers le cadre de pare-brise (6).

10. Système de toit véhicule selon l'une quelconque des revendications 1 à 9,
**caractérisé en ce que**
la partie de toit centrale (3B) est reliée de manière rotative avec des parties de levier (14) dans une région détournée du cadre de pare-brise (6), chacune desdites parties de levier (14) venant en prise, au moyen d'un premier boulon (15), avec une coulisse (16), qui est montée fixe au deuxième module de toit (4), et étant reliée de manière rotative, au moyen d'un deuxième boulon (17), avec un élément de glissement (19) qui est guidé de manière déplaçable dans une glissière (18) du deuxième module de toit (4), lesdites parties de levier (14) étant reliées de manière opérative avec la partie de toit centrale (3B), les coulisses (16) et les éléments de glissement (19) de sorte que, quand on ouvre le toit de véhicule, la partie de toit centrale (3B) puisse être passée par le deuxième module de toit (4) sur une face supérieure du deuxième module de toit (4) détournée de l'habitacle (7) du véhicule.

11. Système de toit véhicule selon l'une quelconque des revendications 1 à 10,
**caractérisé en ce que**
le premier module de toit (3) et le deuxième module de toit (4) sont articulés l'un à l'autre dans la région de jointure des barres latérales (3A) et du deuxième module de toit (4).

12. Système de toit véhicule selon l'une quelconque des revendications 1 à 11,
**caractérisé en ce qu'**un dispositif de rétention d'eau (20) est disposé dans la région de jointure entre la partie de toit centrale (3B) et le deuxième module de toit (4).
